# EUROPÄISCHE PATENTSCHRIFT

(11) **EP 2 630 419 B1**
(45) Veröffentlichungstag und Bekanntmachung des Hinweises auf die Patenterteilung: **02.10.2019**
(21) Anmeldenummer: 11767270.9
(22) Anmeldetag: 11.10.2011
(51) Int. Cl.: F24S 25/00

(54) **STÜTZVORRICHTUNG FÜR EINEN GEWÖLBTEN SPIEGEL**
SUPPORTING DEVICE FOR A CURVED MIRROR
DISPOSITIF DE SUPPORT POUR UN MIROIR INCURVÉ

(30) Priorität: 20.10.2010 DE 102010060091
(43) Veröffentlichungstag der Anmeldung: 28.08.2013
(73) Patentinhaber: ThyssenKrupp Steel Europe AG, 47166 Duisburg (DE)
(72) Erfinder: DREWES, Stephan, 41236 Mönchengladbach (DE); GROßERÜSCHKAMP, Thomas, 47119 Duisburg (DE); HILFRICH, Erik, 40470 Düsseldorf (DE); HIRT, Mark, 44791 Bochum (DE); LIESNER, Jens, 48703 Stadtlohn (DE); PATBERG, Lothar, 47445 Moers (DE); GLASS, Roman, 44135 Dortmund (DE)
(74) Vertreter: Cohausz & Florack
(86) Internationale Anmeldenummer: PCT/EP2011/067736
(87) Internationale Veröffentlichungsnummer: WO 2012/052323

(56) Entgegenhaltungen:
- DE-A1- 2 939 203
- DE-A1- 19 801 078
- DE-U1- 20 120 680
- ES-U- 1 070 880
- US-A- 4 262 660
- US-A- 4 502 200
- US-A- 4 770 162
- US-A1- 2006 157 050
- US-A1- 2008 308 094

## Beschreibung

Die Erfindung betrifft eine Stützvorrichtung für einen gewölbten Spiegel mit Abstützelementen, wobei die Stützvorrichtung mindestens ein gebogenes Tragprofil aus Metall aufweist das gebogene Tragprofil in Längsrichtung zumindest abschnittsweise eine zumindest ähnliche Krümmung wie der abzustützende gewölbte Spiegel aufweist und in Längsrichtung im Wesentlichen spiegelsymmetrisch ist. Außerdem betrifft die Erfindung einen gewölbten Spiegel.

Um den Ausbau von regenerativen Energiequellen voranzutreiben, stehen mittlerweile nicht nur Fragestellungen zur Steigerung der Energieausbeute im Vordergrund, sondern auch in zunehmendem Masse die Verringerung der notwendigen Investitionskosten. Bei solarthermischen Anlagen mit einer Vielzahl von Spiegeln bestimmt die nutzbare Spiegelfläche die erzielbare Leistungsabgabe eines solarthermischen Kraftwerks. Solarthermische Kraftwerke werden mit Flachspiegeln, aber auch mit gewölbten Spiegeln, beispielsweise mit Parabolspiegeln oder Parabolrinnenspiegeln ausgestattet. Aufgrund der großen Flächen der verwendeten gewölbten Spiegel besteht die Notwendigkeit, diese abzustützen, da die Spiegelkontur sehr präzise eingehalten werden muss, um eine hohe Energieausbeute zu gewährleisten. Darüber hinaus müssen die Spiegel mechanisch beispielsweise dem Sonnenstand nachgeführt werden. Auch die Nachführbarkeit der Spiegel setzt eine ausreichende Stabilität der Spiegelflächen voraus. Aus diesem Grund werden entsprechende gewölbte Spiegel über eine Stützvorrichtung abgestützt. Aus der europäischen Patentanmeldung EP 1 947 403 A1 ist eine solche Stützvorrichtung für einen Parabolrinnenspiegel und ein Verfahren zu dessen Herstellung bekannt. Die komplex aufgebaute Stützvorrichtung für einen Parabolrinnenspiegel besteht aus einem geschweißten Rohr an welchem komplex geformte, keilförmige Arme befestigt sind, welche aus einem keilförmigen Zuschnitt einer ebenen Platine durch Tiefziehen hergestellt werden. Aufgrund der keilförmigen Formgebung ist allerdings die Befestigung an beispielsweise einen am Parabolrinnenspiegel vorgesehenen Längsträger nicht auf einfache und präzise Weise möglich. Schließlich ist auch nachteilig, dass die Anbindungselemente an den Parabolrinnenspiegel nicht ohne Weiteres ausgetauscht werden können, da diese in dem Abstützarm integriert sind. Die Verwendung von separaten Abstützelementen gestaltet sich mit der bekannten Stützvorrichtung eines Parabolrinnenspiegels darüber hinaus schwierig.

Des Weiteren ist aus der US 2008/0308094 A1 eine Stützvorrichtung mit einem gebogenen Tragprofil bekannt, auf dem ein gewölbter Spiegel angeordnet ist, wobei die Krümmung des gebogenen Tragprofils dabei der Krümmung des Parabolspiegels im Wesentlichen entspricht.

Ähnliche Stützvorrichtungen für Parabolrinnenspiegel sind auch aus der US 2006/0157050 A1, der DE 29 39 203 A1, der US 4,770,162, der ES 1070 880 U und der DE 198 01 078 A1 bekannt.

Aus der US 4,502,200 (A) wiederum ist eine Stützvorrichtung für einen gewölbten Spiegel eines Heliostaten mit Hut-förmigen Tragprofilen bekannt, wobei ein gewölbter Spiegel dabei ebenfalls von der Krümmung entsprechenden gebogenen Tragprofilen gestützt wird.

Hiervon ausgehend hat sich die vorliegende Erfindung die Aufgabe gestellt, eine Stützvorrichtung für einen gewölbten Spiegel zur Verfügung zu stellen, welche besonders einfach aufgebaut ist und besonders geringe Produktionskosten ermöglicht. Daneben soll ein kostengünstiger, gewölbter Spiegel bereitgestellt werden.

Die oben genannte Aufgabe wird nach der vorliegenden Erfindung durch eine Stützvorrichtung dadurch gelöst, dass das Tragprofil als offenes, U-förmiges Tragprofil ausgebildet ist und die Abstützelemente für den gewölbten Spiegel durch Flansche des U-förmigen Tragprofils oder alternativ einer Mehrzahl an zumindest teilweise flachen, L-förmigen, Z-förmigen, U-förmigen Blechteilen oder einem Tiefziehteil mit Schweiß- oder Einpressbolzen gebildet werden.

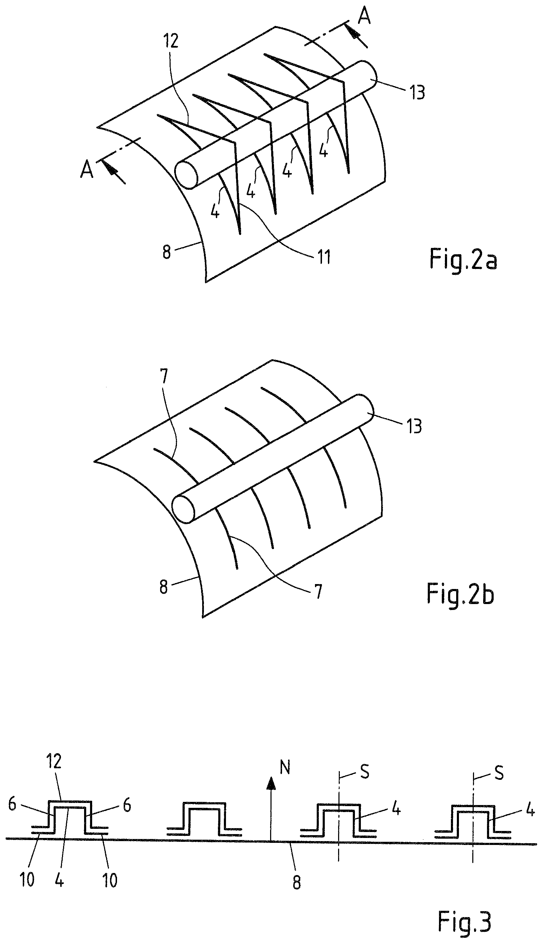

Gebogene Tragprofile sind besonders biegesteif und können daher besonders hohe Kräfte aufnehmen, ohne stark zu verformen. Die üblicherweise vorgesehenen, komplex geformten, beispielsweise nach Art eines Fachwerks ausgebildeten keilförmigen Stützvorrichtungen können erfindungsgemäß durch ein einfaches Tragprofil mit gleicher Steifigkeit ersetzt werden. Das Tragprofil ist auch deutlich einfacher herzustellen als die bisher verwendeten, keilförmigen Stützvorrichtungen, welche komplexe Werkzeugsätze benötigen. Neben dem verringerten Gewicht und Materialverbrauch ermöglicht die in Längsrichtung im Wesentlichen achsensymmetrische Ausgestaltung des Tragprofils, dass diese mit einfachen Werkzeugen mit hoher Formgenauigkeit hergestellt werden können. Unter achsensymmetrischer Ausgestaltung wird erfindungsgemäß eine Spiegelsymmetrie entlang der Spiegelachse S verstanden, wie der Fig. 3 zu entnehmen ist. Die Stützvorrichtungen für gewölbte Spiegel werden dadurch deutlich vereinfacht und ihre Produktionskosten gesenkt.

Erfindungsgemäß ist das Tragprofil der Stützvorrichtung als U-förmiges Tragprofil ausgebildet.

Auf besonders einfache Art und Weise sind die Abstützelemente dadurch erfindungsgemäß dadurch bereitgestellt, dass die Abstützelemente für den gewölbten Spiegel durch Flansche des U-förmigen Tragprofils gebildet werden. Die Flansche können dabei beispielsweise zusätzlich umgeformt bzw. geprägt werden.

Die seitlichen Schenkel des gebogenen U-förmigen Tragprofils sind im Wesentlichen parallel zur Flächennormalen des gewölbten Spiegels ausgerichtet. So kann eine maximale Steifigkeit des U-förmigen Tragprofils in Bezug auf vom gewölbten Spiegel übertragene Kräfte bereitgestellt werden und gegebenenfalls die Materialdicke und damit die Kosten der Stützvorrichtung reduziert werden.

Gemäß einer weiteren Ausgestaltung der erfindungsgemäßen Stützvorrichtung ist die Stützvorrichtung zum Abstützen eines Parabolspiegels oder eines Parabolrinnenspiegels ausgebildet. Parabolspiegel oder Parabolrinnenspiegel benötigen bei großen Flächen besonders viele Stützvorrichtungen, um die genaue parabolische Kontur und damit deren Funktion zu gewährleisten. Mit der erfindungsgemäßen Stützvorrichtung können diese Spiegel auf besonders einfache und kostengünstige Weise stabilisiert bzw. abgestützt werden.

Einen flexiblen Einsatz und eine verbesserte Montage gewährleistet die Stützvorrichtung dadurch, dass das gebogene Tragprofil aus zwei oder mehr in Längsrichtung miteinander verbundenen, gebogenen Tragteilprofilen aus Metall gebildet wird. Durch die Aufteilung des Tragprofils in zwei oder mehr Tragteilprofile können die Produktionskosten durch den Einsatz von einfachen und kleineren Werkzeugen weiter gesenkt werden, wenn beispielsweise zwei im Wesentlichen identische Tragteilprofile spiegelbildlich angeordnet miteinander das gesamte Tragprofil bilden. Die Verwendung von mehreren Tragteilprofilen lässt auch eine belastungsoptimierte Auslegung durch Einsatz unterschiedlicher Blechdicken und/oder Materialien je Sektion zu. Die Tragteilprofile können aufgrund ihrer kleineren Abmessung einfacher transportiert werden.

Gemäß einer weiteren Ausgestaltung der erfindungsgemäßen Stützvorrichtung werden die Herstellkosten für die Stützvorrichtung dadurch minimiert, dass das gebogene Tragprofil und/oder die gebogenen Tragteilprofile ein Tiefziehteil oder ein Walzprofil ist und optional Flansche aufweist bzw. aufweisen. Tiefziehen von U-förmigen Tragprofilen oder U-förmigen Tragteilprofilen kann mit hoher Präzision einfach, mit wenigen Prozessschritten und geringen Taktzeiten durchgeführt werden. Darüber hinaus stehen aber auch andere Herstellverfahren, beispielsweise das Walzprofilieren zur Verfügung, um das gebogene Tragprofil oder die Tragteilprofile bereitzustellen. Insbesondere das Walzprofilieren ermöglicht die Herstellung großer Mengen gleichartiger Tragprofile mit konstantem Querschnitt. Beim Tiefziehen der U-förmigen Tragprofile können dagegen spezifische und belastungsgerechte Form- oder Querschnittsänderungen, beispielsweise zum Ausformen von Anbindungsstellen aufgrund der höheren geometrischen Freiheitsgrade leicht berücksichtigt werden.

Der Querschnitt des Tragprofils oder der Tragteilprofile variiert in Längsrichtung. Über Querschnittsänderungen des Tragprofils können insbesondere unterschiedlichen Steifigkeitsanforderungen in Längsrichtung des Tragprofils Rechnung getragen werden. Eine besonders flexible Anbindung der erfindungsgemäßen Stützvorrichtung an einen gewölbten Spiegel wird dadurch erreicht, dass die Abstützelemente als separate Teile im oder am Tragprofil vorgesehen sind. Daneben können die Abstützelemente für den gewölbten Spiegel auch kumulativ oder alternativ im Tragprofil integriert sein, so dass die Kosten für die Herstellung von Abstützelementen eingespart werden können.

Sofern die Steifigkeit des verwendeten Tragprofils oder der Tragteilprofile nicht ausreichend ist, sind gemäß einer weiteren Ausgestaltung der Stützvorrichtung zwei weitere Zusatzstreben zum Abstützen des gebogenen Tragprofils oder der Tragteilprofile vorgesehen, wobei die zusätzlichen Zusatzstreben auf der vom abzustützenden, gewölbten Spiegel abgewandten Seite des gebogenen Tragprofils respektive der gebogenen Tragteilprofile angeordnet sind. Die Zusatzstreben sind vorzugsweise als U-Profile ausgebildet und verlaufen, sofern geradlinig verlaufende Zusatzstreben verwendet werden, vorzugsweise tangential vom Tragprofilrand zur Mitte des Tragprofils. Vorzugsweise werden beide Zusatzstreben an deren Überschneidungspunkt miteinander verbunden, beispielsweise verschraubt. Zusammen mit dem Tragprofil bilden die geradlinig verlaufenden Zusatzstreben eine einem Dreieck ähnliche Anordnung, welche die Steifigkeit der Stützvorrichtung deutlich steigert.

Gemäß der alternativen Ausführungsform kann erfindungsgemäß eine besonders einfache Aufnahme des Spiegels auf den Tragprofilen der erfindungsgemäßen Stützvorrichtung dadurch bereitgestellt werden, dass Abstützelemente für den gewölbten Spiegel aus einem oder einer Mehrzahl an zumindest teilweise flachen, L-förmigen, Z-förmigen, U-förmigen Blechteilen oder einem Tiefziehteil mit Schweiß- oder Einpressbolzen gebildet werden, wobei die Abstützelemente optional aus Stahl hergestellt sind. Die U-förmigen Tragprofile mit Flansch eignen sich besonders gut als einfache Abstützelemente, welche hochpräzise hergestellt werden können, so dass eine sehr präzise Ausrichtung der Abstützelemente im gebogenen U-förmigen Tragprofil ermöglicht wird. Dies wird auch durch die Verwendung eines Tiefziehteils mit Schweiß- oder Einpressbolzen gewährleistet, wobei der Einpressbolzen entsprechend ausgerichtet werden kann. Optional sind die Abstützelemente aus Stahl hergestellt. Stahl besitzt einerseits die notwendige Festigkeit, um die entsprechenden Kräfte aufzunehmen, andererseits lässt sich Stahl sehr präzise zu den entsprechenden Abstützelementen umformen. Die Abstützelemente können gezielt unterschiedliche Steifigkeiten aufweisen. Durch die Anordnung von Stützelementen mit hohen Steifigkeiten in Richtung der Spiegelkante und von innenliegenden, eine geringere Steifigkeit aufweisenden Stützelementen können durch das Gewicht der Bauteile verursachten Deformationen entgegengewirkt werden und dadurch der Wirkungsgrad verbessert werden. Weiterhin können die Abstützelemente im Wesentlichen achsensymmetrisch, d.h. spiegelsymmetrisch angeordnet sein, was zu einer symmetrischen Belastung in der Stützstruktur führt und dadurch eine Torsion des Tragprofils im Wesentlichen verhindert werden kann. Ferner können die Abstützelemente parallel zur Richtung der Flächennormalen des Spiegels oder wahlweise darauf angeordnet werden, dass die Abstützelemente im Einbauzustand des Tragprofils parallel zueinander in dieselbe Richtung zeigen, wodurch die Montage des Spiegels erleichtert werden kann. Weitere Metalle können Aluminium und Magnesium sein.

Gemäß einer weiteren Ausgestaltung der erfindungsgemäßen Stützvorrichtung sind die Tragprofile und/oder Tragteilprofile und optional die Zusatzstreben aus optional vorbeschichteten Stahlblechen hergestellt, welche eine Dicke von 0,5 mm bis 7,0 mm vorzugsweise 0,5 bis 3,0 mm aufweisen. Stahlbleche mit diesen Dicken gewährleisten, dass die gebogenen Profile der Stützvorrichtung eine ausreichende Festigkeit aufweisen und gleichzeitig gut umformbar sind. Darüber hinaus wird bei der Verwendung von vorbeschichteten Stahlblechen, welche beispielsweise organisch oder anorganisch beschichtet sind, bereits eine gute Korrosionsbeständigkeit erreicht, so dass eine spätere Stückverzinkung entfällt. Als anorganische Beschichtung eignen sich Metalle wie Zn-, Mg-, Al-, Ni-, Cr-, Fe-, Cu-, Si sowie ihre Legierungen, einzeln oder in Kombination aus der Schmelze oder elektrolytisch aufgetragen. Bei der organischen Beschichtung werden Korrosionsschutzprimer und/oder Decklacke nach entsprechender Vorbereitung der Oberflächen bevorzugt aufgetragen.

Auf einfache Weise kann der Korrosionsschutz der Stützvorrichtung aber dadurch weiter gesteigert werden, dass die Tragprofile und/oder Tragteilprofile auch optional die Zusatzstreben einer Tauchkathodenlackierung unterzogen wird. Mit einer Tauchkathodenlackierung lassen sich hohe Stückzahlen an Tragprofilen und/oder Tragteilprofilen mit geringen Kosten verarbeiten.

Grundsätzlich ist auch der Einsatz weiterer Verfahren zum Aufbringen der Korrosionsschichten denkbare, z.B. Feuerverzinken einzelner Bauteile bzw. Baugruppen, Zinklamellenbeschichtung oder Sprühverzinken.

Gemäß einer zweiten Lehre der vorliegenden Erfindung wird die oben aufgezeigte Aufgabe für einen gewölbten Spiegel für ein Solarkraftwerk mit einer Mehrzahl von erfindungsgemäßen Stützvorrichtungen gelöst. Solarkraftwerke weisen häufig eine Vielzahl von gewölbten Spiegeln auf, so dass die deutlich kostengünstigere und zudem sehr präzise herstellbare Stützvorrichtung zu einer Reduzierung der Investitionskosten beiträgt.

Dies gilt insbesondere sofern der Spiegel ein Parabolrinnenspiegel eines Parabolrinnenkraftwerks ist und eine Mehrzahl an erfindungsgemäßen Stützvorrichtungen entlang der Längsachse des Parabolrinnenspiegels angeordnet sind.

Die Erfindung wird nun anhand von Beispielen in Verbindung mit der Zeichnung näher erläutert. Die Zeichnung zeigt in
- Fig. 1a), b): in einer schematische Schnittansicht senkrecht zur Längsachse eines Parabolrinnenspiegels zwei Beispiele einer Stützvorrichtung mit unterschiedlich abgebildeten Tragprofilen,
- Fig. 2a), b): in einer schematischen perspektivischen Darstellung zwei Ausführungsbeispiele eines Parabolrinnenspiegels mit einer Stützvorrichtung mit und ohne zusätzliche Stützprofile,
- Fig. 3: das Ausführungsbeispiel aus Figur 2a im Schnitt A,
- Fig. 4a: in einer schematischen perspektivischen Darstellung zwei Uförmige Tragteilprofile vor dem Verbinden miteinander
- Fig. 4b): in einer schematischen perspektivischen Darstellung zwei Uförmige Tragteilprofile im Einbauzustand gemäß Fig. 1b) und
- Fig. 5a) bis h): Ausführungsbeispiele von Abstützelementen in einer schematischen Schnittansicht sowie teilweise in perspektivischer Darstellung.

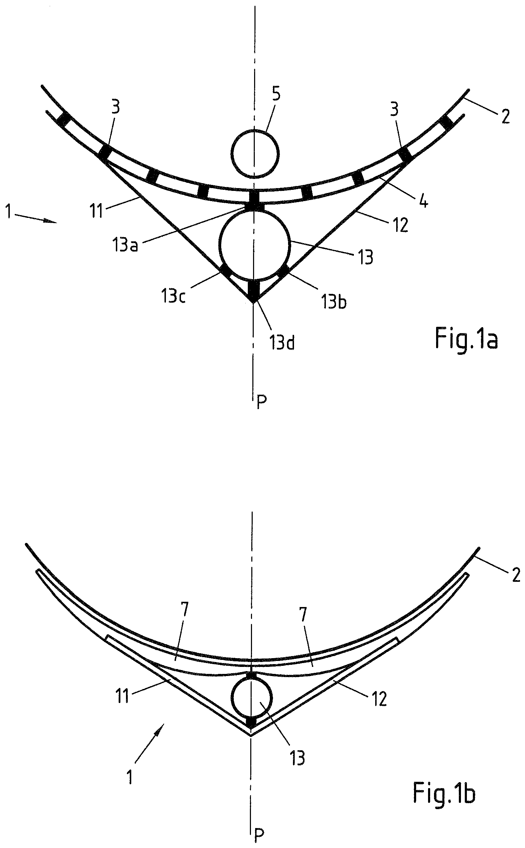

Figur 1a) zeigt zunächst ein Beispiel einer Stützvorrichtung 1 eines gewölbten Spiegels 2 in einer Schnittansicht, welcher hier als Parabolrinnenspiegel ausgebildet ist. Die Stützvorrichtung 1 weist zudem Abstützelemente 3 auf, welche mit dem gewölbten Spiegel 2 in Kontakt stehen und diesen abstützen. Die Abstützelemente 3 sind auf einem in Figur 1 schematisch dargestellten U-förmigen Tragprofil 4 angeordnet. Die Abstützelemente 3 können durch das U-förmige Tragprofil 4 direkt oder durch separate Abstützelemente 3 bereitgestellt werden. Im Zentrum des Parabolrinnenspiegels 2 ist ein Absorberrohr 5 angeordnet, auf welches die eintreffenden Sonnenstrahlen fokussiert werden und in dem ein zu erhitzendes Medium fließt. Darüber hinaus ist sowohl in Fig. 1a) als auch Fig. 1b) eine Spiegelachse P eingezeichnet, welche den in Längsrichtung des Parabolrinnenspiegels verlaufenden spiegelsymmetrischen Aufbau der Stützvorrichtung 1 andeutet. Aufgrund des in Längsrichtung der Tragprofile 4 bzw. der Tragprofilteile 7 achsen- bzw. spiegelsymmetrischen Aufbaus können auf beiden Seiten der Spiegelachse P des Parabolrinnenspiegels 2 identische Tragprofilteile 7 eingesetzt werden, so dass die Produktionskosten gesenkt werden können.
Das Ausführungsbeispiel einer Stützvorrichtung 1 weist zudem zwei zusätzliche Zusatzstreben 11, 12 auf, die beispielsweise aus U-Profilen gebildet werden können, welche einerseits mit dem U-förmigen Tragprofil 4 und andererseits mit einem Zentralträger 13 über optionale Aufnahmeböcke 13b und 13c verbunden sind. Zusätzlich können die Zusatzstreben 11,12 ebenfalls miteinander, beispielsweise über Schrauben oder andere Verbindungsmittel, verbunden sein. Denkbar sind auch weitere Stoff-, kraft- und/oder formschlüssige Verbindungstechniken, wie z.B. Löten, Schweißen, Nieten, Kleben. Im Gegensatz zu den bisher verwendeten Stützvorrichtungen für Parabolrinnenspiegel, zeichnet sich das Ausführungsbeispiel durch eine belastungsoptimierte Konstruktion mit hoher Formstabilität und geringen Fertigungstoleranzen aus, denn es wird neben den Zusatzprofilen 11,12 lediglich ein einfaches, gebogenes U-förmiges Tragprofil 4 benötigt.

Wie in Figur 1a zu erkennen ist, weist das U-förmige Tragprofil 4 eine ähnliche Krümmung wie der gewölbte Parabolrinnenspiegel 2 auf. Dies dient dazu, um den Parabolrinnenspiegel auf einfache Weise über Abstützelemente 3 abstützen zu können. Der Zentralträger 13, welcher über optionale Aufnahmeböcke 13a, 13b, 13c mit dem jeweiligen U-förmigen Tragprofil 4 oder den Zusatzstreben 11, 12 verbunden ist, stützt den Parabolrinnenspiegel 2 zusätzlich in Längsrichtung ab und ist drehbar gelagert, um die Spiegel in Fig.1a dem Sonnenstand folgend auszurichten. Die Stützvorrichtung 1 stellt eine Abstützung des Parabolrinnenspiegels 2 in einer Radialebene zur Verfügung, welche auf besonders einfache Art und Weise hergestellt werden kann. Aufgrund der hohen Anzahl an benötigten Stützvorrichtungen 1 bei Parabolrinnenspiegeln stellt die erfindungsgemäße Vereinfachung der Stützvorrichtung 1 einen nicht unbedeutenden Kostenvorteil gegenüber den konventionellen Stützvorrichtungen dar.

Fig. 1b) entspricht im Wesentlichen der Ausführung in der Fig. 1a), jedoch mit dem Unterschied, dass das Tragprofil aus zwei Tragprofilteilen 7 besteht, die als Tiefziehteile ausgebildet sind und einen belastungsoptimierten Querschnitt in Längsrichtung aufweisen. Die Flansche des U-förmigen Tragprofils dienen als Abstützelemente und können zur direkten Spiegelbefestigungen beispielsweise mittels Dickschichtkleber verwendet werden, wobei dadurch kleinere Toleranzen des U-förmigen Tragprofils ausgeglichen werden können, Fig. 1b. Diese Ausführung reduziert die durch Windlast und Nachstellen des Spiegels verursachten Schwingungen und erhöht dadurch die optische Präzision.

In den Figuren 2a) und 2b) sind in einer perspektivischen Darstellung zwei Ausführungsbeispiele eines Parabolrinnenspiegels 8 mit einer Mehrzahl an erfindungsgemäßen Stützvorrichtungen dargestellt. In Figur 2a) stehen gebogene U-förmige Tragprofile 4 über in Figur 2a) nicht dargestellte Abstützelemente mit dem Spiegel 8 in Kontakt. Der darauf angeordnete Zentralträger 13 stützt den Parabolrinnenspiegel 2 in Längsrichtung ab. Die zusätzlichen angeordneten Zusatzstreben 11 und 12 sind an deren gegenüberliegenden Stirnseiten miteinander verschraubt und mit dem Zentralträger 13 stoff-, form- oder kraftschlüssig verbunden. Darüber hinaus sind die Zusatzstreben 11,12 mit den gebogenen U-förmigen Tragprofilen 4 stoff-, form- oder kraftschlüssig verbunden. Bei dennoch sehr einfachem Aufbau ergibt dies eine besonders steife Abstützung in der Radialebene des Parabolrinnenspiegels 2. Der Zentralträger 13 gewährleistet dann eine in Längsrichtung des Parabolrinnenspiegels 8 benötigte Torsionssteifigkeit.

In Figur 2b) ist das Ausführungsbeispiel aus Figur 2a) dargestellt allerdings ohne zusätzliche Zusatzstreben 11,12 allerdings mit gebogenen Tragteilprofilen 7, welche unterhalb des Zentralträgers 13 auf dem gewölbten Parabolrinnenspiegel angeordnet sind. Figur 2b) stellt eine noch weiter vereinfachte Abstützung eines Parabolrinnenspiegels 8 dar.

In Figur 3 ist das Ausführungsbeispiel aus Figur 2a) im Schnitt A dargestellt. Zu erkennen ist, dass die seitlichen Schenkel 6 des U-förmigen Tragprofils 4 nahezu parallel zu der Flächennormalen N der Spiegeloberfläche des Parabolrinnenspiegels 8 verlaufen. Hierdurch wird erreicht, dass das gebogene U-förmige Tragprofil 4 eine maximale Festigkeit gegenüber Kräften in der Radialebene des Parabolrinnenspiegels 8 entgegensetzen kann. Zusätzlich sind die in Längsrichtung verlaufenden Spiegelachsen bzw. Spiegelebenen S der Tragprofile eingezeichnet, welche den achsen- bzw. spiegelsymmetrischen Aufbau der Tragprofile 4 in Längsrichtung anzeigen.

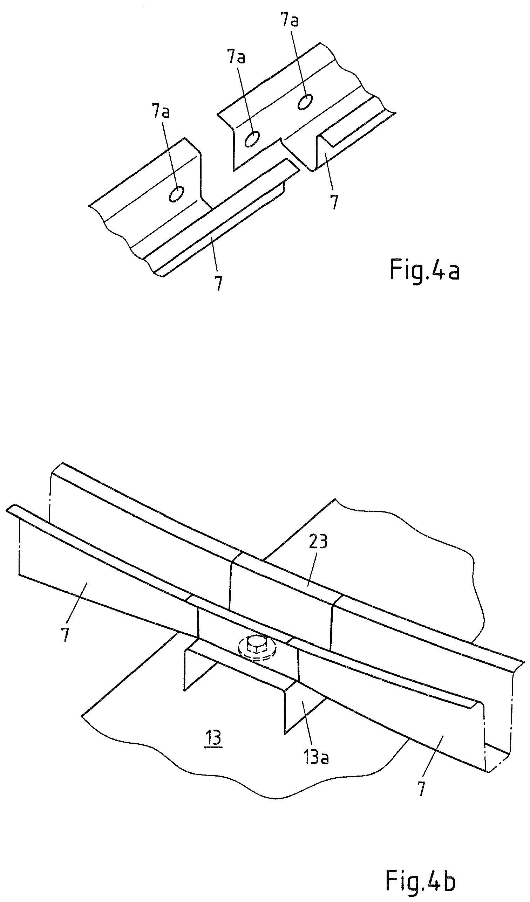

Eine Verbindungsmöglichkeit von zwei Tragteilprofilen 7 zu einem Trag-Profil wird in Figur 4a perspektivisch dargestellt. Die Tragteilprofile 7 können beispielsweise über Verschraubungselemente unter Verwendung von Bohrungen 7a verbunden werden. Allerdings sind auch andere Verbindungsarten der Tragteilprofile 7 denkbar, beispielsweise durch Schrauben, Löten, Schweißen, Kleben oder durch andere Stoff-, form- oder kraftschlüssige Verbindungen.

Figur 4b zeigt den Einbauzustand einer bevorzugten Ausgestaltung einer erfindungsgemäßen Abstützvorrichtung. Die Tragteilprofile 7 können direkt miteinander verbunden sein oder vorzugsweise durch ein Zwischenstück 23, das über dem Aufnahmebock 13a mit dem Zentralträger 13 verschraubt ist, miteinander verbunden sein.

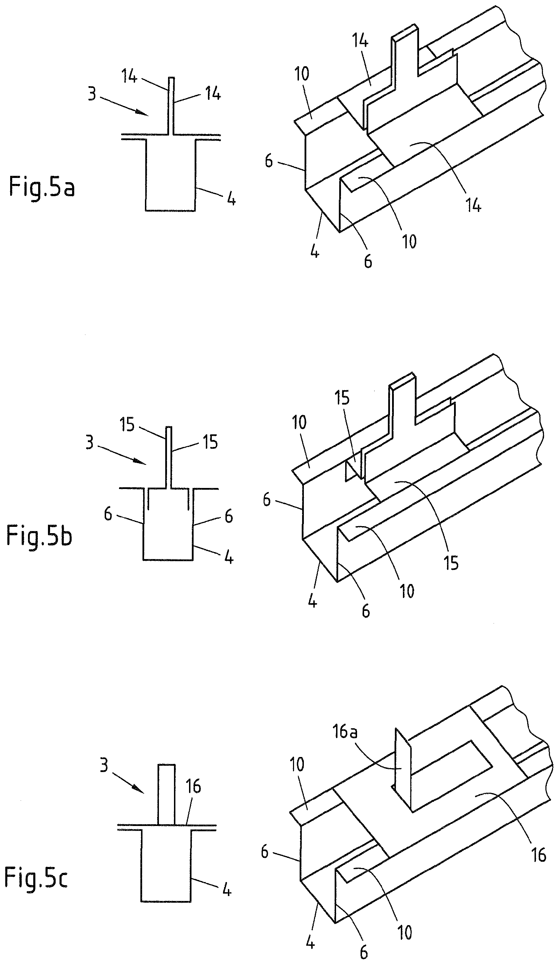

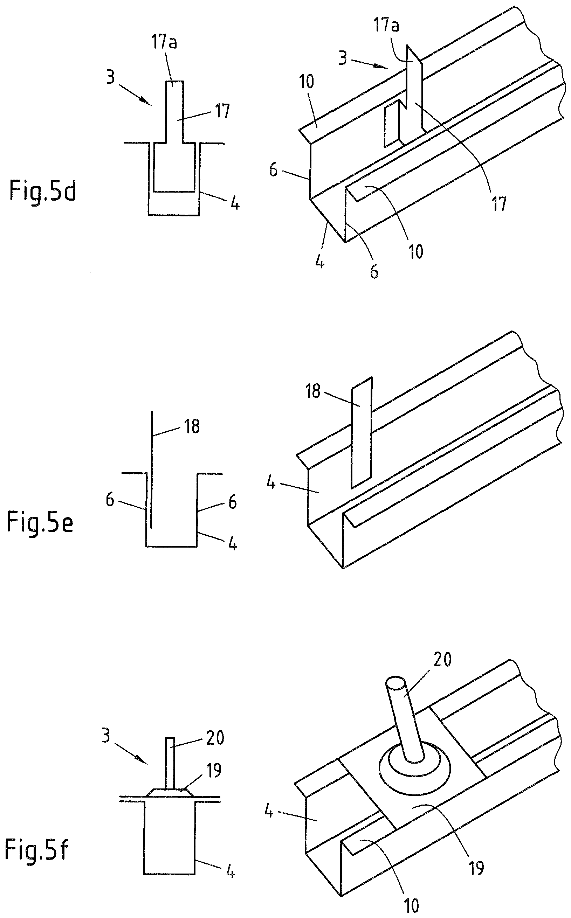

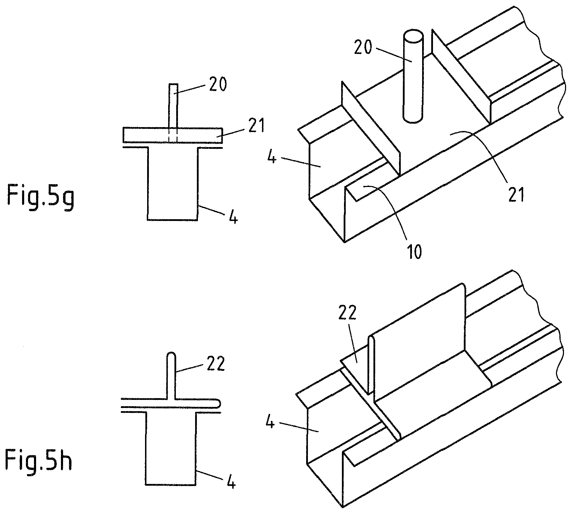

Unterschiedliche Ausführungsformen der Abstützelemente 3 zeigt Figur 5 sowohl in einer Schnittansicht als auch teilweise in perspektivischer Darstellung. In Figur 5a) ist ein Abstützelement 3 dargestellt, welche aus zwei L-förmigen Blechteilen 14 besteht, kann jedoch auch aus einem nicht dargestellten Stanzbiegeteil T-förmig hergestellt sein, welche auf einfache Weise auf den Flanschen 10 des U-förmigen Tragprofils 4 befestigt werden können. Zur Erhöhung der Steifigkeit kann ein zusätzliches, ebenes Blechteil (nicht dargestellt) zwischen den Blechteilen 14 und den Flanschen 10 des U-förmigen Tragprofils 4 angeordnet sein. Wird das Abstützelement 3 durch zwei Z-förmigen Blechteilen 15 bereitgestellt, können die seitlichen Schenkel 6 des U-förmigen Tragprofils 4 zur Befestigung des Abstützelements 3 verwendet werden, wie beispielhaft in Figur 5b) dargestellt ist.

Ein besonders einfaches Abstützelement 3 kann dadurch bereitgestellt werden, dass aus einem flachen Blechteil 16 eine Lasche 16a herausgeschnitten wird und nach oben gebogen wird, Figur 5c). Das Blech wird dann mit den Flanschen 10 des U-förmigen Tragprofils 4 stoff-, form- oder kraftschlüssig verbunden. Die herausstehende Lasche 16a steht in Kontakt mit dem gewölbten Spiegel.

Eine weitere, einfache Variante des Abstützelementes 3 zeigt Figur 5d). Das Abstützelement 3 ist dort als teilweise U-förmiges Blechteil 17 ausgebildet, welches einen vorstehenden Bereich 17a aufweist, welcher wiederum mit dem gewölbten Spiegel in Kontakt steht. Der U-förmige Bereich des Blechteils 17 kann auf einfache Weise dazu verwendet werden, das Blechteil 17 präzise im U-förmigen Tragprofil 4 anzuordnen. Darüber hinaus ergibt sich auch eine hohe Anbindungsfläche zur stoff-, kraft- oder formschlüssigen Verbindung des Blechteils 17 mit dem U-Profil an dessen seitlichen Schenkel 6.

Die einfachste Variante für Abstützelemente zeigt Figur 5e). Das Abstützelement 3 ist lediglich ein flaches Blech 18, welches an einem der seitliche Schenkel 6 des U-förmigen Tragprofils 4 befestigt wird und aus diesem herausragt, so dass das Blech 18 mit dem gewölbten Spiegel in Kontakt steht.

Ein Abstützelement 3, welches aus einem Tiefziehteil 19 und einen Schweiß- oder Einpressbolzen 20 hergestellt ist, zeigt Figur 5f) sowohl in Schnittansicht als auch in perspektivischer Darstellung. Der Vorteil des Schweiß- oder Einpressbolzen 20 liegt darin, dass dieser über dessen Anordnung in dem Tiefziehteil 19, beispielsweise über eine "schräge" Anordnung, spezifische Abstützpunkte des gewölbten Spiegels 2 erreichen kann und eine ausreichende Abstützung gewährleistet. Die Kräfte werden über den Schweiß- oder Einpressbolzen 20 zudem auch bei schräger Anordnung sehr gut in das Tiefziehteil 19 eingeleitet und von diesem an das U-förmige Tragprofil 4 weitergegeben. Das Tiefziehteil 19 weist hierzu eine tiefgezogene Vertiefung auf, in welcher der Schweiß- oder Einpressbolzen 20 angeordnet ist.

Eine weitere Variante ist in Fig. 5g) dargestellt. Diese entspricht im Wesentlichen der Ausgestaltung in Fig. 5f), jedoch mit dem Unterschied, dass die Kanten 21 des Tiefziehteils 19, die nicht vollständig mit dem Flansch 10 des U-förmigen Tragprofils 4 verbunden sind, um 90° abgekantet sind, wodurch wiederum die Steifigkeit des Abstützelements erhöht werden kann.

Die Fig. 5h) zeigt ein weiteres Beispiel eines Stanzbiegeteils 22, des zur Erhöhung der Steifigkeit des U-förmigen Tragprofils 4 beiträgt.

Um eine möglichst einfache und kostengünstige Lösung für benötigte verstärkte Varianten bei lokal erhöhten Windlasten bereitzustellen, können metallische Einleger in den Tragprofilen integriert werden, die vorher oder nachträglich als beispielsweise Patch, lokal mit dem Tragprofil verbunden werden.

Neben der Querschnittsoptimierung können auch belastungsoptimierte Halbzeuge in Form von Tailored Products (Tailored Blanks/Tailored Strips) verwendet werden, beispielsweise für die Tragprofile als auch für die Zusatzstreben.

## Patentansprüche

1. Stützvorrichtung (1) für einen gewölbten Spiegel (2, 8) mit Abstützelementen (3),
wobei die Stützvorrichtung (1) mindestens ein gebogenes Tragprofil (4) aus Metall aufweist, das gebogene Tragprofil (4) in Längsrichtung zumindest abschnittsweise eine zumindest ähnliche Krümmung wie der abzustützende, gewölbte Spiegel (2,8) aufweist und in Längsrichtung im Wesentlichen spiegelsymmetrisch ist, wobei
das Tragprofil (4) als offenes, U-förmiges Tragprofil (4) ausgebildet ist und die Abstützelemente (3) für den gewölbten Spiegel (2, 8) durch Flansche (10) des U-förmigen Tragprofils (4) gebildet werden,
**dadurch gekennzeichnet, dass**
das gebogene Tragprofil (4) aus zwei oder mehr in Längsrichtung miteinander verbundenen, gebogene Tragteilprofilen (7) aus Metall gebildet wird, wobei die seitlichen Schenkel (6) des gebogenen U-förmigen Tragprofils (4) im Wesentlichen parallel zur Flächennormalen des gewölbten Spiegels (2) ausgerichtet sind und wobei der Querschnitt des Tragprofils (4) in Längsrichtung variiert.

2. Stützvorrichtung (1) für einen gewölbten Spiegel (2, 8) mit Abstützelementen (3), wobei die Stützvorrichtung (1) mindestens ein gebogenes Tragprofil (4) aus Metall aufweist, das gebogene Tragprofil (4) in Längsrichtung zumindest abschnittsweise eine zumindest ähnliche Krümmung wie der abzustützende, gewölbte Spiegel (2, 8) aufweist und in Längsrichtung im Wesentlichen spiegelsymmetrisch ist, wobei das Tragprofil (4) als offenes, U-förmiges Tragprofil (4) ausgebildet ist,
**dadurch gekennzeichnet, dass**
die Abstützelemente (3) für den gewölbten Spiegel (2,8) aus einem oder einer Mehrzahl an zumindest teilweise flachen, L-förmigen, Z-förmigen, U-förmigen Blechteilen (14,15,16,17,18) oder einem Tiefziehteil (19) mit Schweiß- oder Einpressbolzen (20) gebildet werden, wobei die Abstützelemente (3) optional aus Stahl hergestellt sind und wobei das gebogene Tragprofil (4) aus zwei oder mehr in Längsrichtung miteinander verbundenen, gebogene Tragteilprofilen (7) aus Metall gebildet wird, wobei die seitlichen Schenkel (6) des gebogenen U-förmigen Tragprofils (4) im Wesentlichen parallel zur Flächennormalen des gewölbten Spiegels (2) ausgerichtet sind und wobei der Querschnitt des Tragprofils (4) in Längsrichtung variiert.

3. Stützvorrichtung nach Anspruch 1 oder 2,
**dadurch gekennzeichnet, dass**
die Stützvorrichtung zum Abstützen eines Parabolspiegels oder eines Parabolrinnenspiegels (8) ausgebildet ist.

4. Stützvorrichtung nach einem der Ansprüche 1 bis 3,
**dadurch gekennzeichnet, dass**
die gebogenen Tragteilprofile (7) Tiefziehteile oder Walzprofile sind.

5. Stützvorrichtung nach einem der Ansprüche 2 bis 4, **dadurch gekennzeichnet, dass**
die Abstützelemente (3) für den gewölbten Spiegel (2, 8) im oder am Tragprofil (4) integriert sind und/oder als separate Teile vorgesehen sind.

6. Stützvorrichtung nach einem der Ansprüche 1 bis 5,
**dadurch gekennzeichnet, dass**
zwei weitere Zusatzstreben (11,12) zum Abstützen der gebogenen Teilprofile (7) vorgesehen sind, und die zusätzlichen Zusatzstreben (11, 12) auf der vom abzustützenden gewölbten Spiegel (2,8) abgewandten Seite der gebogenen Tragteilprofile (7) angeordnet sind.

7. Stützvorrichtung nach einem der Ansprüche 1 bis 6,
**dadurch gekennzeichnet, dass**
die Tragteilprofile (7) und optional die Zusatzstreben (11, 12) aus optional vorbeschichteten Stahlblechen hergestellt sind, welche eine Dicke von 0,5 bis 7,0 mm, vorzugsweise 0,5 bis 3,0 mm aufweisen.

8. Stützvorrichtung nach einem der Ansprüche 1 bis 7,
**dadurch gekennzeichnet, dass**
die Tragteilprofile (7) und optional die Zusatzstreben (11, 12) einer Tauchkathodenlackierung unterzogen worden sind.

9. Gewölbter Spiegel (2,8) für ein Solarkraftwerk mit einer Mehrzahl von Stützvorrichtungen (1) nach einem der Ansprüche 1 bis 8.

10. Gewölbter Spiegel (2,8) nach Anspruch 9,
**dadurch gekennzeichnet, dass**
der Spiegel ein Parabolrinnenspiegel (8) eines Parabolrinnenkraftwerks ist und eine Mehrzahl an Stützvorrichtungen (1) nach einem der Ansprüche 1 bis 8 entlang der Längsachse des Parabolrinnenspiegels (8) angeordnet sind.

## Claims

1. Support device (1) for a curved mirror (2, 8) having support elements (3), wherein the support device (1) has at least one bent carrier profile-member (4) of metal, the bent carrier profile-member (4) having in the longitudinal direction at least partially an at least similar curvature to the curved mirror (2) to be supported and being substantially mirror-symmetrical in the longitudinal direction, the bent carrier profile-member being designed as an open, U-shaped carrier profile-member (4) and the support elements (3) for the curved mirror (2, 8) being formed by flanges (10) of the U-shaped carrier profile-member (4), **characterized in that** the bent carrier profile-member (4) is made up of two or more bent carrier profile-member parts (7) of metal connected to one another in the longitudinal direction, the lateral limbs (6) of the bent U-shaped carrier profile-member (4) being aligned essentially parallel to the surface normal of the curved mirror (2), and the cross-section of the carrier profile-member (4) varying in the longitudinal direction.

2. Support device for a curved mirror (2, 8) having support elements (3), wherein the support device (1) has at least one bent carrier profile-member (4) of metal, the bent carrier profile-member (4) having in the longitudinal direction at least partially an at least similar curvature to the curved mirror (2) to be supported and being substantially mirror-symmetrical in the longitudinal direction, wherein the carrier profile-member (4) is constructed as an open, U-shaped carrier profile-member, **characterized in that** the support elements (3) for the curved mirror (2, 8) are formed by one or more at least partially flat, L-shaped, Z-shaped, U-shaped sheet metal parts (14, 15, 16, 17, 18) or a deep-drawn component (19) having welding or pressing-in pins (20), the support elements (3) optionally being produced from steel und wherein the bent carrier profile-member (4) is made up of two or more bent carrier profile-member parts (7) of metal connected to one another in the longitudinal direction, the lateral limbs (6) of the bent U-shaped carrier profile-member (4) being aligned essentially parallel to the surface normal of the curved mirror (2), and the cross-section of the carrier profile-member (4) varying in the longitudinal direction.

3. Support device according to claim 1 or 2, **characterised in that** the support device is constructed to support a parabolic mirror or a parabolic channelled mirror (8).

4. Support device according to any one of claims 1 to 3, **characterised in that** the bent carrier profile-member parts (7) are deep-drawn components or rolled profile-members.

5. Support device according to any one of claims 2 to 4, **characterised in that** the support elements (3) for the curved mirror (2, 8) are integrated in or on the carrier profile-member (4) and/or are provided as separate components.

6. Support device according to any one of claims 1 to 5, **characterised in that** two additional auxiliary struts (11, 12) for supporting the bent profile-member parts (7) are provided, and the additional auxiliary struts (11, 12) are arranged at the side of the bent carrier profile-member parts (7) remote from the curved mirror (2, 8) to be supported.

7. Support device according to any one of claims 1 to 6, **characterised in that** the carrier profile-member parts (7) and optionally the auxiliary struts (11, 12) are produced from optionally pre-coated steel sheets which have a thickness of 0.5 mm to 7.0 mm, preferably 0.5 to 3.0 mm.

8. Support device according to any one of claims 1 to 7, **characterised in that** the carrier profile-member portions (7) and optionally the auxiliary struts (11, 12) have been subjected to a cathode immersion lacquering operation.

9. Curved mirror (2, 8) for a solar power station having a plurality of support devices (1) according to any one of claims 1 to 8.

10. Curved mirror (2, 8) according to claim 9, **characterised in that** the mirror is a parabolic channelled mirror (8) of a parabolic channelled power station and a plurality of support devices (1) according to any one of claims 1 to 8 are arranged along the longitudinal axis of the parabolic channelled mirror (8).

## Revendications

1. Dispositif de support (1) pour un miroir courbe (2, 8) comportant des éléments de support (3), le dispositif de support (1) comportant au moins un profilé de support courbé (4) en métal, le profilé de support courbé (4) présentant au moins par sections dans la direction longitudinale une courbure au moins similaire à celle du miroir courbé (2, 8) à supporter et est essentiellement symétrique dans la direction longitudinale, le profilé de support (4) étant réalisé sous la forme d'un profilé de support (4) ouvert en forme de U et les éléments de support (3) pour le miroir courbe (2) étant formés par des brides (10) du profilé de support (4) en forme de U, **caractérisé en ce que** le profilé de support courbé (4) est formé de deux ou plusieurs profilés de support partiels courbés (7) métalliques reliés entre eux dans la direction longitudinale, les branches latérales (6) du profilé de support courbé (4) en U sont alignées essentiellement parallèlement à la normale de surface du miroir courbe (2), et la section transversale du profilé de support (4) variant en direction longitudinale.

2. Dispositif de support (1) pour un miroir courbe (2, 8) comportant des éléments de support (3), le dispositif de support (1) comportant au moins un profilé de support courbé (4) en métal, le profilé de support courbé (4) présentant au moins par sections dans la direction longitudinale une courbure au moins similaire à celle du miroir courbe (2, 8) à supporter et est essentiellement symétrique dans la direction longitudinale, le profilé de support (4) étant réalisé sous la forme d'un profilé de support (4) ouvert en forme de U, **caractérisé en ce que** les éléments de support (3) pour le miroir courbe (2, 8) sont formés par un ou plusieurs pièces en tôle (14, 15, 16, 17, 18) au moins partiellement plats, en forme de L, en forme de Z, en forme de U ou en forme de U, ou par une pièce emboutie (19) avec des boulons à souder ou à sertir (20), les éléments de support (3) étant éventuellement en acier et le profilé de support courbé (4) étant formé de deux ou plusieurs profilés de support partiels courbés (7) métalliques reliés entre eux dans la direction longitudinale, les branches latérales (6) du profilé de support courbé (4) en forme de U sont alignées essentiellement parallèlement à la normale de surface du miroir courbe (2) et la section transversale du profilé de support (4) variant en direction longitudinale.

3. Dispositif de support selon la revendication 1 ou 2, **caractérisé en ce que** le dispositif de support est conçu pour supporter un miroir parabolique ou un miroir en auge parabolique (8).

4. Dispositif de support selon l'une des revendications 1 à 3, **caractérisé en ce que** les profilés de support partiels courbés (7) sont des pièces embouties ou des profilés laminés.

5. Dispositif de support selon l'une des revendications 2 à 4, **caractérisé en ce que** les éléments de support (3) pour le miroir courbe (2, 8) sont intégrés dans ou sur le profilé de support (4) et/ou sont prévus comme pièces séparées.

6. Dispositif de support selon l'une des revendications 1 à 5, **caractérisé en ce que** deux autres contre-fiches supplémentaires (11, 12) sont prévues pour supporter les profilés partiels courbés (7), et les contre-fiches supplémentaires (11, 12) sont disposées sur le côté des profilés partiels courbés (7) de support à l'opposé du miroir courbe (2, 8) à supporter.

7. Dispositif de support selon l'une des revendications 1 à 6, **caractérisé en ce que** les profilés de support partiels (7) et éventuellement les contre-fiches supplémentaires (11, 12) sont fabriqués à partir de tôles d'acier éventuellement prélaquées qui ont une épaisseur de 0,5 à 7,0 mm, de préférence 0,5 à 3,0 mm.

8. Dispositif de support selon l'une des revendications 1 à 7, **caractérisé en ce que** les profilés de support partiels (7) et éventuellement les contre-fiches supplémentaires (11, 12) ont été soumis à une peinture cathodique par immersion.

9. Miroir courbe (2, 8) pour une centrale solaire avec plusieurs dispositifs de support (1) selon l'une des revendications 1 à 8.

10. Miroir courbe (2, 8) selon la revendication 9, **caractérisé en ce que** le miroir est un miroir parabolique (8) d'une centrale électrique à auge parabolique et plusieurs moyens de support (1) selon l'une quelconque des revendications 1 à 8 sont disposés le long de l'axe longitudinal du miroir parabolique (8).
